# EUROPÄISCHE PATENTSCHRIFT

(11) **EP 3 444 209 B1**
(45) Veröffentlichungstag und Bekanntmachung des Hinweises auf die Patenterteilung: **17.07.2024**
(21) Anmeldenummer: 18185032.2
(22) Anmeldetag: 23.07.2018
(51) Int. Cl.: B65G 47/14

(54) **VEREINZELUNGSVORRICHTUNG UND VERFAHREN ZUM VEREINZELN VON KLEINVOLUMIGEN SCHÜTTGUTOBJEKTEN**
SEPARATING DEVICE AND METHOD FOR SEPARATING SMALL-VOLUME BULK MATERIAL OBJECTS
APPAREIL ET PROCÉDÉ DE PLAÇAGE DES OBJETS EN VRAC DE PETIT VOLUME

(30) Priorität: 16.08.2017 DE 102017118711
(43) Veröffentlichungstag der Anmeldung: 20.02.2019
(73) Patentinhaber: Kraemer, Thilo, 64291 Darmstadt (DE)
(72) Erfinder: Kraemer, Thilo, 64291 Darmstadt (DE); Elsner, Claus, 63768 Hösbach (DE); Jezierski, Thomas, 63500 Seligenstadt (DE)
(74) Vertreter: Hamel, Armin

(56) Entgegenhaltungen:
- WO-A1-2016/016942
- WO-A1-88/07967
- DE-A1- 3 711 538
- US-A- 4 501 382

## Beschreibung

Die vorliegende Erfindung liegt allgemein im technischen Gebiet der Mess- und Prüftechnik und insbesondere im Bereich des Sortierens, Packens und Trennens von kleinen pharmazeutischen Erzeugnissen, wie etwa Tabletten, Pillen, Zäpfchen oder Körnern für Mess- und Prüfvorrichtungen.

Insbesondere betrifft die vorliegende Erfindung eine Vereinzelungsvorrichtung nach dem Oberbegriff des Patentanspruchs 1 sowie ein Verfahren zum Vereinzeln von kleinvolumigen Schüttgutobjekten nach dem Patentanspruch 4.

Es sind bereits Vereinzelungsvorrichtungen für kleinvolumige Schüttgüter und Verfahren zum Vereinzeln kleinvolumiger Schüttgüter bekannt. Beispielsweise sind aus der WO 88/07967 eine Vorrichtung und ein Verfahren zum Vereinzeln von relativ kleinvolumigen Schüttgütern, wie Tabletten, Pillen, Zäpfchen oder Körnern, bekannt. Die Schüttgutobjekte werden in eine Rinne - auch Schütte genannt - mit Seitenwandungen gefüllt, wobei die Rinne gemäß einer schiefen Ebene abwärts geneigt ist, wobei danach die Rinne hin und her bewegt wird, so dass die Fallkante der Rinne hin und her bewegt wird. Die Rinne ist mittels eines Motors dergestalt hin und her bewegbar, dass die Fallkante der Rinne hin und her bewegt wird. Vorzugsweise ist die Längsachse der Rinne auch Drehachse, um die die Rinne hin und her gedreht wird. Der Motor ist vorzugsweise ein Schrittmotor, dessen Achse Schritte kleinen Drehwinkels auszuführen im Stande ist.

Bekannte Verfahren zum Vereinzeln kleinvolumiger Schüttgüter umfassen keine Regelung mit einer Rückführungsschleife, so dass unerwartete Änderungen im Betrieb und Störeinflüsse von außen in der Regel ein Eingreifen auf Seiten eines Bedieners erfordern.

Aufgabe der Erfindung ist daher das Bereitstellen einer verbesserten

Vereinzelungsvorrichtung und eines verbesserten Verfahrens zum Vereinzeln von kleinvolumigen Schüttgütern, die einen höheren Automatisierungsgrad bei vielfältigen Betriebszuständen ermöglichen und resistenter gegen Störeinflüsse sind.

Die Aufgabe wird gelöst durch eine Vereinzelungsvorrichtung mit den Merkmalen des Anspruchs 1 und ein Verfahren mit den Merkmalen des Anspruchs 4.

Somit wird eine Vereinzelungsvorrichtung für kleinvolumige Schüttgüter bereitgestellt, umfassend einen Antrieb und eine Rinne, wobei die Rinne von dem Antrieb um eine Längsachse der Rinne schwenkbar ist, wobei die Rinne von dem Antrieb ferner um eine im Wesentlichen horizontal verlaufende Achse automatisch kippbar ist. Dadurch bewegt eine Fallkante am vorderen Ende der Rinne sich infolge der Kippbewegung auf und ab. Zudem ist die Rinne durch den Antrieb in Vibration versetzbar.

Da die Rinne vollständig um ihre eigene Längsachse schwenkbar ist, lässt sich die Rinne auch kopfüber stellen, so dass in der Rinne befindliche Schüttgutobjekte ausgeleert werden. Für die Vereinzelung eignen sich allerdings Schwenkbewegungen um die Längsachse mit deutlich geringerer Amplitude. Sinnvollerweise wird die Rinne dabei um weniger als 90° in beide Richtungen um die Längsachse geschwenkt, so dass die Schüttgutobjekte beim Schwenken nicht durch eine obere Öffnung der Rinne herausfallen. Vorzugsweise wird die Rinne dabei um weniger als 60°, um weniger als 45°, um weniger als 30°, um weniger als 20°, um weniger als 15°, um weniger als 10° oder um weniger als 5° in beide Richtungen um die Längsachse geschwenkt.

Zusätzlich lässt sich die Vereinzelung durch das Kippen der Rinne manipulieren. Je steiler die Rinne verläuft - also je näher sich die Rinne an der Vertikalen befindet - umso schneller wandern die Schüttgutobjekte bei der Vereinzelung durch die Rinne, bis sie schließlich an der Fallkante aus der Rinne herausfallen.

Gegenüber dem bekannten seitlichen Hin- und Herbewegen der Fallkante durch Drehbewegungen der Rinne um eine vertikale Achse haben die Schwenkbewegungen und das Vibrieren den Vorteil, dass Schüttgutobjekte an der Fallkante gerade herunterfallen und nicht beim Verlassen der Rinne noch Bewegungsenergie in Horizontalrichtung haben. Somit lässt sich die Bewegung eines einzelnen Schüttgutobjekts während des Falls nach Verlassen der Rinne genauer vorhersagen. Die Bewegungen der Rinne sind so besser steuerbar und der gesamte Vereinzelungsprozess vom Befüllen über das Manipulieren eines Förderstroms von Schüttgutobjekten bis zum Beenden der Vereinzelung oder dem Entleeren der Rinne lässt sich besser regeln. Vorzugsweise ist daher eine Regelungseinrichtung vorgesehen, die entweder in dem Antrieb integriert oder extern, dezentral oder zentral oder auf sonst bekannte Weise ausgestaltet ist. Der Antrieb umfasst vorzugsweise einen Schrittmotor mit einer an der Längsachse der Rinne ausgerichteten Drehachse. Der Antrieb umfasst vorzugsweise ferner einen Stellantrieb für die Kippbewegung der Rinne, beispielsweise einen Gleichstrommotor, einen Getriebemotor oder einen Schrittmotor mit Linearaktuator. Eine derart ausgestaltete Vereinzelungsvorrichtung hat den Vorteil, dass die Rinne kürzer ausgestaltet sein kann als bei bekannten Vereinzelungsvorrichtungen, was eine Platz- und Materialersparnis mit sich bringt.

Gemäß einer vorteilhaften Ausführungsform der Vereinzelungsvorrichtung umfasst die Rinne einen perforierten Boden, so dass etwaige Brösel von beschädigten Schüttgutobjekten oder andere störende Gegenstände in den Schüttgütern vor oder bei der Vereinzelung durch den perforierten Boden fallen. Die Brösel und störenden Gegenstände werden dann nicht vereinzelt und behindern auch sonst nicht die Vereinzelung. Ein oder mehrere Löcher im perforierten Boden können entsprechend in ihrer Form und Größe an eine Form und Größe der zu vereinzelnden Schüttgutobjekte angepasst sein. Denkbar ist auch dass der perforierte Boden oder ein perforierter Bereich des Bodens der Rinne austauschbar ausgestaltet ist, so dass Form und Größe der Löcher an Form und Größe verschiedener Schüttgutobjekte angepasst werden können.

Gemäß einer weiteren vorteilhaften Ausführungsform umfasst die Rinne mindestens eine Schikane für Schüttgutobjekte. Die mindestens eine Schikane kann in Form eines Kreiszylinders, eines Zapfens oder auf sonst bekannte Weise ausgestaltet sein und dient dazu, die Schüttgutobjekte während der Vereinzelung zurückzuhalten, so dass möglichst nur einzelne Schüttgutobjekte nacheinander an der Fallkante angelangen.

Vorzugsweise ist mindestens eine Schikane als Innenwand ausgebildet. Die Innenwand verläuft vorzugsweise quer zu der Längsachse der Rinne. Vorzugsweise verschließt die Innenwand dabei teilweise die Rinne, beispielsweise indem die Innenwand sich nur über ein Drittel, über die Hälfte oder über zwei Drittel einer Breite der Rinne erstreckt.

Ebenfalls wird die Aufgabe durch ein Verfahren zum Vereinzeln von kleinvolumigen Schüttgutobjekten mit einer Vereinzelungsvorrichtung, einem Objektdetektor und einer Regelungseinrichtung gelöst. Die Vereinzelungsvorrichtung umfasst eine bewegliche Rinne. Der Objektdetektor ist eingerichtet, um zu erkennen, wenn ein Schüttgutobjekt von einer Fallkante der beweglichen Rinne herunterfällt, und um daraufhin ein Signal abzugeben. Dieses Signal kann vorzugsweise von der Regelungseinrichtung verarbeitet werden. Das Verfahren weist die folgenden aufeinanderfolgenden Schritte auf:
a) Einbringen von Schüttgutobjekten in die Rinne;
b) Beginn der Vereinzelung durch reziprokes Bewegen der Rinne;
c) Regeln der Bewegungen der Rinne mit der

Regelungseinrichtung in Abhängigkeit von mindestens einem Trend, der aus mindestens einer Objektzeit gebildet wird, wobei je eine Objektzeit zwischen einem aktuellen Signal des Objektdetektors und dem Beginn der Vereinzelung in Schritt b) oder zwischen einem aktuellen Signal des Objektdetektors und einem vorhergehenden Signal des Objektdetektors vergeht.

Der mindestens eine Trend ist dabei ein Maß für die aktuelle Geschwindigkeit der Vereinzelung. Je kürzer die Objektzeit bzw. der daraus gebildete Trend, umso mehr Schüttgutobjekte fallen pro Zeiteinheit von der Fallkante der Rinne herunter. Ein Trend wird dabei aus mindestens einer Objektzeit gebildet. In einem einfachen Fall kann ein Trend beispielsweise ein Durchschnittswert oder Mittelwert aus mehreren Objektzeiten sein. Trends können auch Form und Masse der Schüttgutobjekte berücksichtigen. Der Fachmann kann aber auch auf andere bekannte Weise Trends aus Objektzeiten bilden.

Mithilfe des Objektdetektors kann die Regelungseinrichtung auch erkennen, wenn mehr als ein Objekt gleichzeitig oder in engem zeitlichen Zusammenhang von der Fallkante der Rinne herunterfällt. Dies erhöht die Prozesssicherheit, insbesondere bei dem allerersten zu vereinzelnden Schüttgutobjekt nach dem Beginn der Vereinzelung.

Durch die Regelung kann die Vereinzelung an die Beschaffenheit der jeweiligen zu vereinzelnden Schüttgüter angepasst werden, beispielsweise hinsichtlich der Größe, der Masse, der Form, der Oberflächenbeschaffenheit etc. der einzelnen Schüttgutobjekte.

Gemäß einer vorteilhaften Ausführungsform des Verfahrens wird die Rinne - vor dem Schritt a) des Einbringens von Schüttgutobjekten - derart um eine im Wesentlichen horizontal verlaufende Achse gekippt, dass die Längsachse der Rinne horizontal verläuft oder zu der Fallkante der Rinne hin ansteigt. In einer solchen Position können keine Schüttgutobjekte zu der Fallkante hinwandern und dort herunterfallen, so dass die Schüttgutobjekte sicher in der Rinne aufbewahrt werden können und nicht aus der Rinne herausfallen. Vor dem Beginn der Vereinzelung in Schritt b) muss die Rinne dann gegenläufig derart um die im Wesentlichen horizontal verlaufende Achse werden, dass die Längsachse der Rinne horizontal verläuft oder zu der Fallkante hin absinkt.

Gemäß einer weiteren vorteilhaften Ausführungsform des Verfahrens umfasst das Regeln der Bewegungen der Rinne in Schritt c) die folgenden Schritte:
d) Warten darauf, dass der Objektdetektor ein Signal abgibt, das anzeigt, dass ein Schüttgutobjekt von der Fallkante der Rinne heruntergefallen ist;
f) Bestimmen des mindestens einen Trends;
g) Vergleichen des mindestens einen Trends mit einem Vergleichstrend;
h) Wenn der mindestens eine Trend größer ist als der Vergleichstrend, wird die Vereinzelung beschleunigt;
i) Wenn der mindestens eine Trend kleiner ist als der Vergleichstrend, wird die Vereinzelung verlangsamt;
k) Warten auf das nächste aktuelle Signal des Objektdetektors.

Entspricht der in Schritt f) bestimmte Trend dem Vergleichstrend, so wird die Vereinzelung weder beschleunigt noch verlangsamt.

Der Vergleichstrend kann dabei vor dem ersten Durchlauf der Schritte des Verfahrens vom Benutzer oder von der Regelungseinrichtung an einen Mess- oder Prüfprozess oder für ein anderes Peripheriegerät angepasst werden, so dass die Schüttgutobjekte in vorteilhaften zeitlichen Abständen vereinzelt werden.

Insbesondere kann der Vergleichstrend vor Beginn der Vereinzelung durch eine Initialisierung ermittelt werden, beispielsweise im Rahmen einer Selbsterkennung durch einen Probelauf. Vorzugsweise wird der Vergleichstrend überdies fortlaufend optimiert, wobei die jeweils zuletzt ermittelten Objektzeiten bzw. Trends zugrunde gelegt werden. Hierbei können beispielsweise der zuletzt ermittelte Trend, mehrere zuletzt ermittelte Trends, oder die zuletzt ermittelten ein, zwei drei, vier, fünf oder sechs oder mehr Objektzeiten zugrunde gelegt werden. Sowohl der ermittelte Trend als auch der Vergleichstrend können vorzugsweise produktspezifisch -je nach Art der Schüttgutobjekte - optimiert werden, beispielsweise nach Form oder Masse der einzelnen Schüttgutobjekte. Vorzugsweise können die Trends auch die prozentuale Zeitzunahme und Zeitabnahme aufeinanderfolgender Objektzeiten berücksichtigen. So kann der Objektdetektor beispielsweise das erste Signal nach 1,0 Sekunden, das zweite Signal nach weiteren 1,5 Sekunden und das dritte Signal nach weiteren 2,2 Sekunden abgeben. Der daraus abzuleitende Trend geht dann von einer Zunahme der Objektzeit von etwa 50% je Signal aus. In der Konsequenz kann die Vereinzelung dann gefahrlos beschleunigt werden, um so auf eine optimale Vereinzelung mit verbesserten Objektzeiten zu hinzuwirken.

Die Vereinzelung ist optimal, wenn sie einerseits so schnell wie möglich abläuft, und die Schüttgutobjekte andererseits möglichst einzeln und in vorteilhaften zeitlichen Abständen von der Fallkante herunterfallen. Das bedeutet, dass die Vereinzelung optimal ist, wenn die Objektzeiten einerseits klein sind und andererseits einen Trend bilden, der vorteilhaft für die jeweilige Mess- bzw. Prüfanwendung ist. Häufig ist es dabei vorteilhaft, wenn die Objektzeiten möglichst gleich sind, also einen möglichst konstanten Trend bilden, und die Trends gleich sind.

Zur Ermittlung der Trends können zudem auch Werte wie die Art der Schüttgutobjekte oder eine Fallzeit durch einen Abgleich von dynamischen Kennfeldern ermittelt werden. Bevorzugt wird zudem ein Lernvorgang implementiert, bei dem ältere Trends mit neu ermittelten Trends überschrieben werden und die Optimierung mit den neu ermittelten Trends fortgesetzt wird.

Ist die Vereinzelung optimal, d.h. wurde ein optimaler Trend erhalten, so kann dieser Trend für die entsprechenden Schüttgüter abgespeichert werden und für zukünftige Tests zur Verfügung gestellt werden.

Vorzugsweise umfasst das Verfahren ferner die Schritte:
e) Anhalten der Vereinzelung durch Anhalten der reziproken Bewegungen der Rinne nach dem Schritt d) des Wartens darauf, dass der Objektdetektor ein Signal abgibt;
j) Zurückkehren zu Schritt b) nach der Beschleunigung der Vereinzelung in Schritt h) oder der Verlangsamung der Vereinzelung in Schritt i).

Das Anhalten der Vereinzelung in Schritt e) kann entweder durch ein Interuptsignal der Regelungseinrichtung ausgelöst werden, direkt nachdem der Objektdetektor in Schritt d) ein aktuelles Signal empfangen hat, oder durch das Erreichen einer Wartezeit, während der Objektdetektor in Schritt d) mindestens ein aktuelles Signal empfangen hat. Nach der Beschleunigung der Vereinzelung in Schritt h) oder der Verlangsamung der Vereinzelung in Schritt i) muss dann gemäß Schritt j) zu Schritt b) zurückgekehrt werden, um die Vereinzelung nach dem Anhalten der Vereinzelung erneut zu beginnen. Da die Rinne nach dem Anhalten der Vereinzelung stillsteht, können keine weiteren Schüttgutobjekte vereinzelt werden bzw. von der Fallkante der Rinne herunterfallen, während ermittelt wird, ob irgendwelche Parameter des Vereinzelungsprozesses anzupassen sind.

Gemäß einer weiteren vorteilhaften Ausführungsform des Verfahrens umfasst das Bestimmen des mindestens eines Trends in Schritt f) die folgenden Schritte:
f1) Empfangen des aktuellen Signals des Objektdetektors, das anzeigt, dass ein Schüttgutobjekt von der Fallkante der Rinne heruntergefallen ist;
f2) Überprüfen, ob der Objektdetektor vor der Abgabe des aktuellen Signals bereits ein vorhergehendes Signal abgegeben hat;
f3) Wenn der Objektdetektor seit dem Beginn der Vereinzelung noch kein vorhergehendes Signal abgegeben hat, wird die Zeit zwischen dem Beginn der Vereinzelung in Schritt b) und dem aktuellen Signal des Objektdetektors als Objektzeit bestimmt;
f4) Wenn der Objektdetektor seit dem Beginn der Vereinzelung bereits mindestens ein vorhergehendes Signal abgegeben hat, wird die Zeit zwischen dem vorhergehenden Signal des Objektdetektors und dem aktuellen Signal des Objektdetektors als Objektzeit bestimmt;
f5) Bestimmen mindestens eines Trends aus mindestens einer der bestimmten Objektzeiten.

Somit ist die Objektzeit entweder der zeitliche Abstand zwischen zwei aufeinanderfolgenden Signalen des Objektdetektors, oder - wenn der Objektdetektor seit dem Beginn der Vereinzelung in Schritt b) noch kein Signal abgegeben hat - die Zeit zwischen dem Beginn der Vereinzelung in Schritt b) und dem ersten Signal des Objektdetektors. Somit wächst die Objektzeit, wenn die Vereinzelung langsamer wird, also wenn pro Zeiteinheit weniger Schüttgutobjekte von der Fallkante der Rinne herunterfallen. Wird die Vereinzelung beschleunigt, so wird die Objektzeit kleiner und weniger Schüttgutobjekte fallen von der Fallkante der Rinne herunter. Durch die Schritte f1) bis f4) lässt sich die Objektzeit zuverlässig ermitteln.

Gemäß einer anderen vorteilhaften Ausführungsform des Verfahrens werden nach dem Schritt b) des Beginns der Vereinzelung folgende Schritte ausgeführt:
d1) Abwarten einer Wartezeit;
d2) Überprüfen, ob der Objektdetektor während der Wartezeit mindestens ein Signal abgegeben hat, das anzeigt, dass ein Schüttgutobjekt von der Fallkante der Rinne heruntergefallen ist;
d3) Wenn der Objektdetektor während der Wartezeit mindestens ein Signal abgegeben hat, wird mit Schritt e) fortgefahren;
d4) Wenn der Objektdetektor nach dem Ablauf der Wartezeit noch kein Signal abgegeben hat, wird überprüft, ob eine voreingestellte maximale Anzahl von erfolglosen Wartezeitdurchläufen erreicht ist;
d5) Wenn die voreingestellte maximale Anzahl von erfolglosen Wartezeitdurchläufen noch nicht erreicht ist, wird die Vereinzelung beschleunigt und anschließend zu Schritt d1) zurückgekehrt;
d6) Wenn die voreingestellte maximale Anzahl von erfolglosen Wartezeitdurchläufen erreicht ist, wird die Vereinzelung endgültig abgebrochen und die Rinne wird um ihre Längsachse geschwenkt, bis sie kopfüber steht und derart um die im Wesentlichen horizontal verlaufende Achse gekippt, dass die Längsachse der Rinne horizontal verläuft oder zu der Fallkante hin ansteigt.

Wenn der Objektdetektor während der Wartezeit mindestens ein Signal abgegeben hat, so sind während der Wartezeit ein oder mehrere Schüttgutobjekte von der Fallkante heruntergefallen. Je nach Anwendungsfall kann ein Durchlaufen der Schritte f), g), h), i) nach jedem einzelnen Schüttgutobjekt zu sprunghaften Reaktionen des Systems führen, so dass es im Einzelfall vorteilhaft sein kann, gezielt abzuwarten, bis der der Objektdetektor zwei, drei, vier, fünf, sechs oder mehr Signale abgegeben hat bzw. die Wartezeit entsprechend zu wählen. Aus den resultierenden mehreren Objektzeiten lässt sich zudem ein aussagekräftiger Trend ermitteln.

Mit der Überprüfung, ob der Objektdetektor während der Wartezeit mindestens ein Signal abgegeben hat, kann zudem auf Fehlerzustände reagiert werden. Ist zum Beispiel die Rinne so gekippt, dass die Längsachse der Rinne horizontal verläuft oder zu der Fallkante am vorderen Ende der Rinne hin ansteigt, können die Schüttgutobjekte - wie bereits erläutert - trotz reziproker Bewegungen der Rinne nicht zu der Fallkante hinwandern und dort herunterfallen, sondern verbleiben in der Rinne. Auch wenn sich keine Schüttgutobjekte mehr in der Rinne befinden oder die Rinne verstopft ist, kann kein Schüttgutobjekt mehr von der Fallkante herunterfallen und den Objektdetektor auslösen. Wird trotz ein- oder mehrmaligen Abwartens der Wartezeit kein Schüttgutobjekt vom Objektdetektor erfasst, so wird die Vereinzelung abgebrochen.

Nach dem endgültigen Abbruch der Vereinzelung hingegen ist es vorteilhaft, die Rinne um ihre Längsachse zu schwenken, bis sie kopfüber steht, und die Rinne derart um die im Wesentlichen horizontal verlaufende Achse zu kippen, dass die Längsachse der Rinne horizontal verläuft oder zu der Fallkante hin ansteigt. Denn in dieser Entleerstellung lässt sich die Rinne zuverlässig entleeren und für den nächsten Einsatz vorbereiten. Zudem wird einem Bediener zuverlässig angezeigt, dass die Vereinzelung abgebrochen worden ist, wenn die Vereinzelungsvorrichtung die Entleerstellung einnimmt.

Besonders vorteilhaft umfasst die für das Verfahren verwendete Vereinzelungsvorrichtung nicht nur eine bewegliche Rinne, sondern ist eine Vereinzelungsvorrichtung nach einer der oben beschriebenen Ausführungsformen.

Vorzugsweise ist darüber hinaus eine Empfindlichkeit des Objektdetektors einstellbar.

Gemäß einer vorteilhaften Ausführungsform des Verfahrens umfasst das reziproke Bewegen der Rinne im Schritt b) Schwenkbewegungen um die Längsachse der Rinne. Vorzugsweise umfasst das reziproke Bewegen der Rinne im Schritt b) überdies ein Vibrieren der Rinne.

Gemäß einer weiteren vorteilhaften Ausführungsform des Verfahrens umfasst das Beschleunigen der Vereinzelung die folgenden Schritte:
I) Erhöhen der Empfindlichkeit des Objektdetektors;
II) Steigern einer Intensität der Vibration der Rinne;
III) Steigern einer Amplitude der Schwenkbewegungen der Rinne um die Längsachse;
IV) Vergrößern eines Winkels zwischen einer Horizontalen und der Längsachse der Rinne durch Kippen der Rinne um die im Wesentlichen horizontal verlaufende Achse;
   oder eine Kombination von mindestens zwei der Maßnahmen I) bis IV).

Gemäß einer weiteren vorteilhaften Ausführungsform des Verfahrens umfasst das Verlangsamen der Vereinzelung die folgenden Schritte:
V) Absenken der Empfindlichkeit des Objektdetektors;
VI) Senken der Intensität der Vibration der Rinne;
VII) Senken der Amplitude der Schwenkbewegungen der Rinne um die Längsachse;
VIII) Verkleinern des Winkels zwischen einer Horizontalen und der Längsachse der Rinne durch Kippen der Rinne um die im Wesentlichen horizontal verlaufende Achse;
   oder eine Kombination von mindestens zwei der Maßnahmen V) bis VIII).

Je nach Anwendungsfall können die jeweiligen Einstellungen zum Beschleunigen oder Verlangsamen der Vereinzelung in diskreten Schritten, auf Erfahrungswerten oder implementierten Profilen basierend, prozentual von dem jeweiligen Wert der Empfindlichkeit des Objektdetektors, Intensität der Vibration der Rinne, Amplitude der Schwenkbewegungen der Rinne, Winkels zwischen einer Horizontalen und der Längsachse der Rinne oder auf sonst bekannte Weise verändert werden.

Gemäß einer weiteren vorteilhaften Ausführungsform des Verfahrens ist der Objektdetektor ein unterhalb der Fallkante der Rinne angeordnetes Piezoelement und gibt ein Signal ab, wenn ein Schüttgutobjekt von der Fallkante der Rinne herunter auf das Piezoelement fällt.

Je nach Auswerteelektronik lässt sich die Empfindlichkeit von Piezoelementen vergleichsweise genau einstellen. Zudem sind Piezoelemente kostengünstig verfügbar. Durch die Anordnung des Piezoelements unterhalb der Fallkante der Rinne ist es auf einfache Weise möglich, dass das Piezoelement ein Signal abgibt, wenn ein Schüttgutobjekt von der Fallkante der Rinne herunterfällt und beim Aufprall mechanisch auf das Piezoelement einwirkt, so dass eine elektrische Spannung erzeugt wird. Vorzugsweise handelt es sich bei dem Piezoelement um einen Schallwandler aus Piezokeramik.

Gemäß einer anderen vorteilhaften Ausführungsform des Verfahrens sind die Schüttgüter homogen und eine Masse eines einzelnen Schüttgutobjekts wird verwendet, um die Empfindlichkeit des Objektdetektors einzustellen. Dabei kann die Masse durch vorheriges Wiegen manuell durch den Bediener oder automatisch ermittelt werden. Die Empfindlichkeit des Objektdetektors kann einzeln vom Bediener eingestellt werden oder vorzugsweise von der Regelungseinrichtung geregelt werden. So ist beispielsweise bei sehr leichten Schüttgutobjekten eine selbstständige Optimierung der Empfindlichkeit des Objektdetektors mithilfe der Regelungseinrichtung möglich. Ein versehentliches Auslösen des Objektdetektors durch Umgebungseinflüsse oder -geräusche ist weitestgehend ausgeschlossen. Durch Messen und Auswerten eines Strom- und Spannungsverlaufs des Antriebs lassen sich vorzugsweise zudem eine Drehwinkelbeschleunigung der Rinne um die Längsachse und eine Drehwinkelbeschleunigung der Rinne um die im Wesentlichen horizontale Achse erfassen, so dass auf Resonanzen, auf den aktuellen Befüllungsgrad der Rinne und - durch Interpolation bei bekannter Masse eines einzelnen Schüttgutobjekts - auf die Anzahl der in der Rinne befindlichen Schüttgutobjekte rückgeschlossen werden kann. Des Weiteren kann die Regelungseinrichtung derart produktspezifisch programmierbar ausgestaltet sein, dass sie über die erfassten Messgrößen und über implementierte Profile die Motoren und Stellglieder des Antriebs während des Vereinzelungsprozesses auf ein bestimmtes gewolltes (parametriertes) Vereinzelungsverhalten hin regelt. Hierzu können Ausführungsformen des Verfahrens beispielsweise in einem Algorithmus implementiert und von der Regelungseinrichtung in Gestalt einer programmierbaren elektrischen Steuerung ausgeführt werden.

Vorzugsweise wird die Masse eines einzelnen Schüttgutobjekts mittels einer Mess- oder Prüfvorrichtung erfasst und der Regelungseinrichtung übermittelt. Diese Mess- oder Prüfvorrichtung kann eine gänzlich separate Vorrichtung oder ein Peripheriegerät der Vereinzelungsvorrichtung sein. Denkbar ist auch, dass der Objektdetektor eine Wiegefunktion hat und einzelne Schüttgutobjekte automatisch wiegt. Ein solches Verfahren ist auch für die Vereinzelung von inhomogenen Schüttgütern geeignet. Der Objektdetektor könnte dann jeweils einen Massenwert für jedes einzelne Schüttgutobjekt ermitteln und an die Regelungseinrichtung übermitteln. Die Regelungseinrichtung könnte entsprechende Durchschnittsmassenwerte bilden, die Vereinzelung nach Bedarf beschleunigen oder verlangsamen und die Empfindlichkeit des Objektdetektors anpassen.

Gemäß einer vorteilhaften Ausführungsform des Verfahrens wird der mindestens eine Trend aus je mindestens zwei Objektzeiten gebildet. Bei mindestens zwei Objektzeiten lassen sich Tendenzen in der Entwicklung der Objektzeiten ableiten, beispielsweise eine Abnahme oder eine Zunahme der Objektzeiten. Noch bessere Ergebnisse können erzielt werden, wenn der Trend oder die Trends jeweils aus drei, vier, fünf oder sechs Objektzeiten ermittelt werden, weil die Tendenzen in der Entwicklung der Objektzeiten so noch besser abgelesen und ausgewertet werden können. Vorzugsweise wird ein Trend aus drei oder vier Objektzeiten ermittelt.

Es wird explizit auch vorgeschlagen, mehrere Merkmale der einzelnen beschriebenen Ausführungsformen untereinander zu kombinieren.

Die vorliegende Erfindung wird im Folgenden anhand der beigefügten Zeichnungen näher erläutert, in welchen:
- Figur 1: eine perspektivische Ansicht einer Ausführungsform der Vereinzelungsvorrichtung zeigt;
- Figur 2: eine Seitenansicht der Vereinzelungsvorrichtung in einer Ruhestellung zeigt;
- Figur 3: eine Draufsicht auf die Vereinzelungsvorrichtung zeigt;
- Figur 4: eine Seitenansicht der Vereinzelungsvorrichtung in einer Entleerstellung zeigt;
- Figur 5: eine Seitenansicht der Vereinzelungsvorrichtung in einer Befüllstellung zeigt;
- Figur 6: eine Seitenansicht der Vereinzelungsvorrichtung in einer Vereinzelungsstellung zeigt; und
- Figur 7: ein Ablaufdiagramm eines Verfahrens zur Vereinzelung von kleinvolumigen Schüttgütern zeigt.

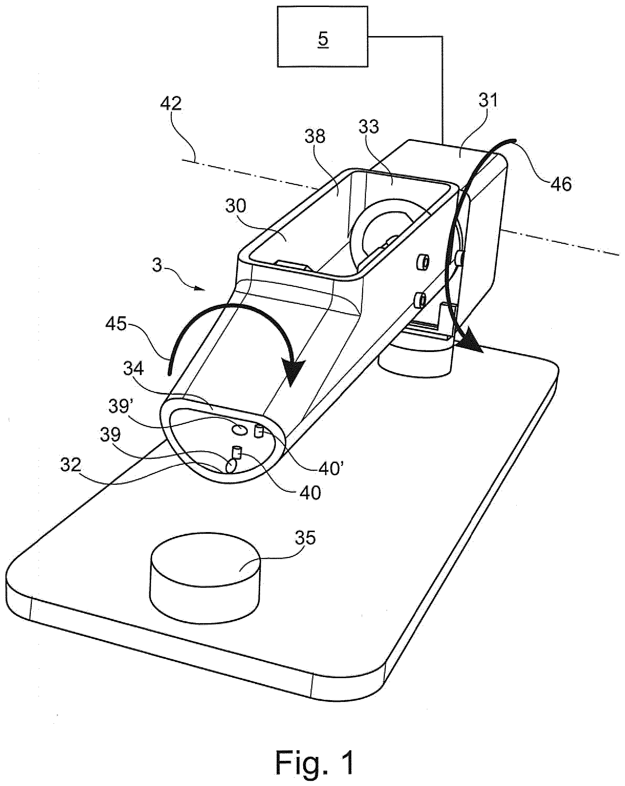

In Figur 1 ist eine Vereinzelungsvorrichtung 3 für kleinvolumige Schüttgüter 39, 39' abgebildet. Die Vereinzelungsvorrichtung 3 umfasst einen Antrieb 31 und eine Rinne 30. Die Rinne 30 ist entlang und entgegen einer Schwenkrichtung 45 um eine Längsachse (in Figur 1 nicht dargestellt) der Rinne 30 schwenkbar. Die Rinne 30 ist ferner entlang und entgegen einer Kipprichtung 46 um eine im Wesentlichen horizontal verlaufende Achse 42 an einem hinteren Ende 33 der Rinne 30 kippbar. Durch Kippbewegungen 46 der Rinne 30 um die Achse 42 wird eine Fallkante 32 an einem offenen vorderen Ende 34 der Rinne 30 auf und ab bewegt. Zudem ist die Rinne 30 durch den Antrieb 31 in Vibration versetzbar. Im Inneren der Rinne 30 sind Schikanen 40, 40' in Kreiszylindergestalt angeordnet, die in Form eines Kreiszylinders ausgestaltet sind. Die Rinne hat eine obere Öffnung 38, in welche zu vereinzelnde Schüttgutobjekte 39, 39' eingefüllt werden können.

Der Antrieb 31 umfasst einen Schrittmotor mit einer an der Längsachse der Rinne ausgerichteten Drehachse und vorzugsweise ferner einen Stellantrieb für die Kippbewegung der Rinne, beispielsweise einen Gleichstrommotor, einen Getriebemotor oder einen Schrittmotor mit Linearaktuator. Der Antrieb 31 wird von der schematisch dargestellten Regelungseinrichtung 5 geregelt. Die Regelungseinrichtung 5 empfängt Daten und Signale von einem beispielsweise als Piezoelement ausgestalteten Objektdetektor 35 bezüglich der Zeitpunkte, an denen der Objektdetektor 35 erkennt, dass ein Schüttgutobjekt 39 von der Fallkante 32 herunter und auf den Objektdetektors 35 fällt. Die Empfindlichkeit des Objektdetektors 35 ist manuell von einem Bediener oder von der Regelungseinrichtung 5 einstellbar. In Figur 1 sind zwei Schüttgutobjekte 39, 39' in der Rinne 30 zu erkennen. Vorliegend sind die Schüttgüter 39, 39' homogen, so dass die Masse eines einzelnen Schüttgutobjektes 39 verwendet werden kann, um die Empfindlichkeit des Objektdetektors 35 einzustellen. Die Masse des einzelnen Schüttgutobjekts 39 kann bekannt sein und manuell eingegeben werden, mittels einer Mess- oder Prüfvorrichtung (in Figur 1 nicht dargestellt) erfasst und der Regelungseinrichtung 5 übermittelt werden, oder mittels des Objektdetektors 35 erfasst und der Regelungseinrichtung 5 übermittelt werden.

Der Vereinzelungsprozess ist somit gezielt von der Regelungseinrichtung 5 manipulierbar. Eine Geschwindigkeit eines Förderstroms von Schüttgutobjekten 39, 39' lässt sich durch Erhöhen oder Absenken der Empfindlichkeit des Objektdetektors 35, Steigern oder Senken einer Intensität der Vibration der Rinne 30, Steigern oder Senken einer Amplitude der Schwenkbewegungen der Rinne 30 um ihre Längsachse 41, Vergrößern oder Verkleinern eines Winkels 44 zwischen einer Horizontalen 43 und der Längsachse 41 der Rinne 30 durch Kippen der Rinne 30 um die im Wesentlichen horizontal verlaufende Achse 42 an dem hinteren Ende 33 der Rinne 30, oder durch eine Kombination von mindestens zwei der vorgenannten Maßnahmen beschleunigen bzw. verlangsamen.

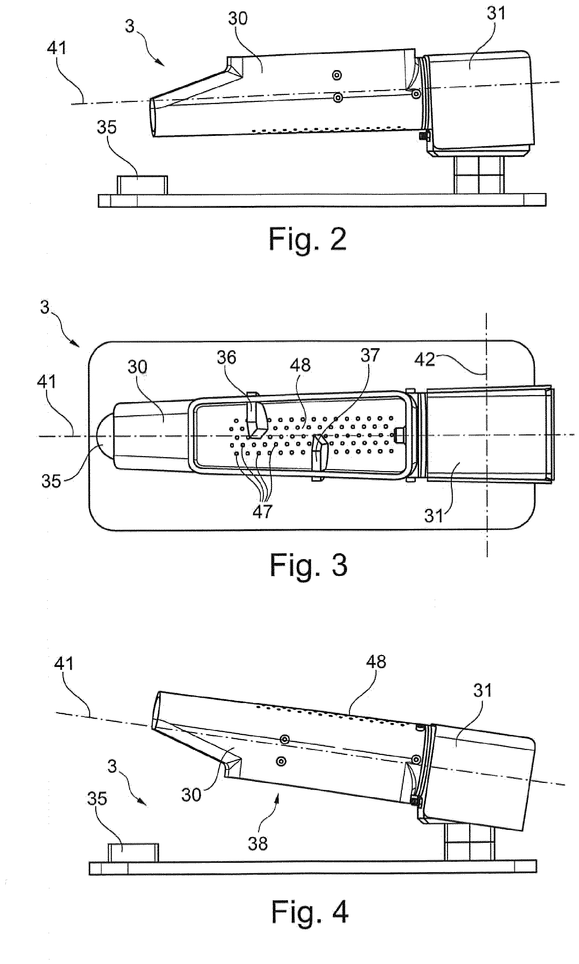

In Figur 2 ist eine Seitenansicht der Vereinzelungsvorrichtung 3 dargestellt. Dabei ist die Längsachse 41 der Rinne 30 zu sehen, um die der Antrieb 31 die Rinne 30 schwenken kann.

Figur 3 zeigt die Vereinzelungsvorrichtung 3 von oben. Es ist zu sehen, dass die Rinne 30 einen perforierten Boden 35 mit mehreren Löchern 47 hat. Die Löcher 47 dieser Perforation 35 sind so klein, dass ganze Schüttgutobjekte (in Figur 3 nicht dargestellt) nicht durch die Löcher 47 hindurchfallen können. Brösel von beschädigten Schüttgutobjekten oder andere störende kleinere Gegenstände in den Schüttgütern können jedoch durch die Löcher 47 hindurchfallen und werden so nicht mit vereinzelt. Ferner umfasst die Rinne 30 zwei Innenwände 36, 37, die quer zu der Längsachse 41 der Rinne 30 verlaufen und die Rinne 30 jeweils etwa zur Hälfte verschließen. Durch die Innenwände 36, 37 entsteht beim Vereinzeln ein relativ gleichmäßiger Förderstrom und nur einzelne Schüttgutobjekte gelangen nacheinander an der Fallkante an.

Figur 4 zeigt die Vereinzelungsvorrichtung 3 in einer Entleerstellung. Wird die Rinne 30 um 180° um die Längsachse 41 geschwenkt, so steht sie Kopf und die Schüttgüter (in Figur 4 nicht dargestellt) fallen aus der oberen Öffnung 38 der Rinne 30 heraus, ohne Vereinzelt zu werden oder den Objektdetektor 35 auszulösen. Auf diese Weise lässt sich die Vereinzelungsvorrichtung 3 zuverlässig entleeren, beispielsweise wenn ein Vereinzelungsprozess abgebrochen werden soll oder wenn die Rinne 30 für die Vereinzelung von anderen Schüttgütern freigemacht werden muss.

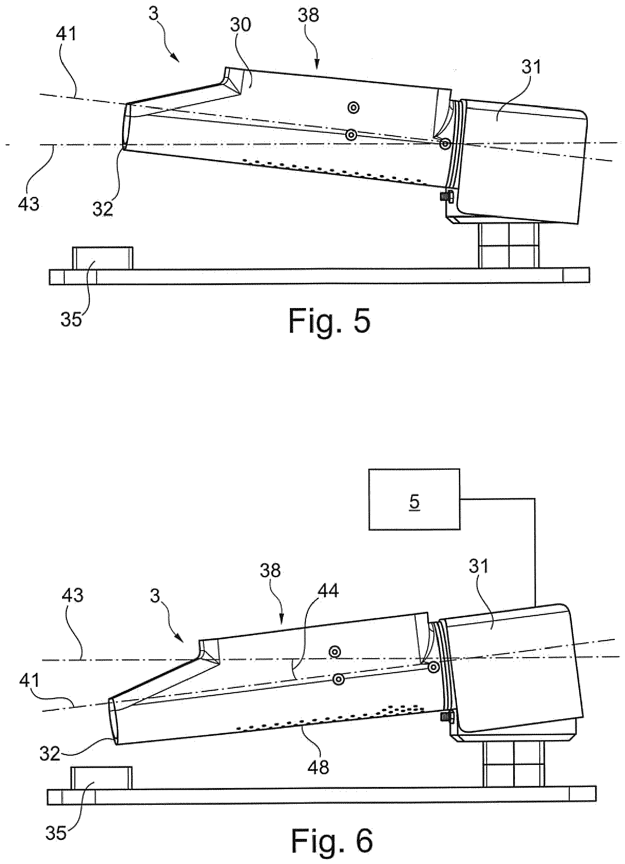

Figur 5 zeigt die Vereinzelungsvorrichtung 3 in einer Befüllstellung. Dabei ist Rinne 30 so gekippt, dass die Längsachse 41 der Rinne 30 zu der Fallkante 32 am vorderen Ende 34 der Rinne 30 hin ansteigt. Als Referenz ist die Horizontale 43 eingezeichnet. Zudem zeigt die obere Öffnung 38 der Rinne 30 nach oben. Somit ist ein Durchfallen bzw. Durchrollen von Schüttgutobjekten (in Figur 3 nicht dargestellt) durch die Rinne 30 über die Fallkante 32 hinaus und herunter auf den Objektdetektor 35 beim Befüllen der Vereinzelungsvorrichtung 3 ausgeschlossen.

Figur 6 zeigt die Vereinzelungsvorrichtung 3 in einer Vereinzelungsstellung. Dabei ist Rinne 30 so gekippt, dass die Längsachse 41 der Rinne 30 zu der Fallkante 32 am vorderen Ende 34 der Rinne 30 hin abgesenkt ist. Ein Kippwinkel 44 der Rinne 30 - also der Winkel 44 zwischen der Horizontalen 43 und der Längsachse 41 der Rinne 30 - ist vergleichsweise groß. Als Referenz ist die Horizontale 43 eingezeichnet. Um Schüttgutobjekte (in Figur 6 nicht dargestellt) zu vereinzeln, werden die Schüttgüter zunächst in die Rinne 30 eingebracht. Danach wird mit der Vereinzelung begonnen, indem die Rinne 30 reziprok bewegt wird, das heißt indem die Rinne 30 durch den Antrieb 31 zum Vibrieren gebracht wird und/oder um ihre Längsachse 41 geschwenkt wird. Sinnvollerweise wird die Rinne 30 dabei um weniger als 35° in beide Richtungen um die Längsachse 41 geschwenkt, so dass Schüttgutobjekte beim Schwenken nicht durch die obere Öffnung 38 herausfallen.

Die Bewegungen der Rinne 3 werden von der externen Regelungseinrichtung 5 geregelt. Hierfür wird eine Objektzeit definiert, die zwischen einem aktuellen Signal des Objektdetektors 35 und einem vorhergehenden Signal des Objektdetektors 35 vergeht. Aus mindestens einer Objektzeit wird ein Trend bestimmt. Der Trend wird mit einem Vergleichstrend verglichen. Ist der ermittelte Trend zu klein wird die Vereinzelung beschleunigt; ist er zu groß, wird die Vereinzelung verlangsamt.

Die Vereinzelung geht damit insgesamt schneller und fehlerfreier von statten als mit einer Vereinzelungsvorrichtung nach dem Stand der Technik, weil bei bekannten Verfahren keine Optimierung aufgrund von bereits ermittelten Trends erfolgt. Zudem ist durch den größer einstellbaren Kippwinkel 44 zuverlässig gewährleistet, dass die Rinne 30 komplett entleert werden kann und keine Schüttgutobjekte in der Rinne 30 zurückbleiben.

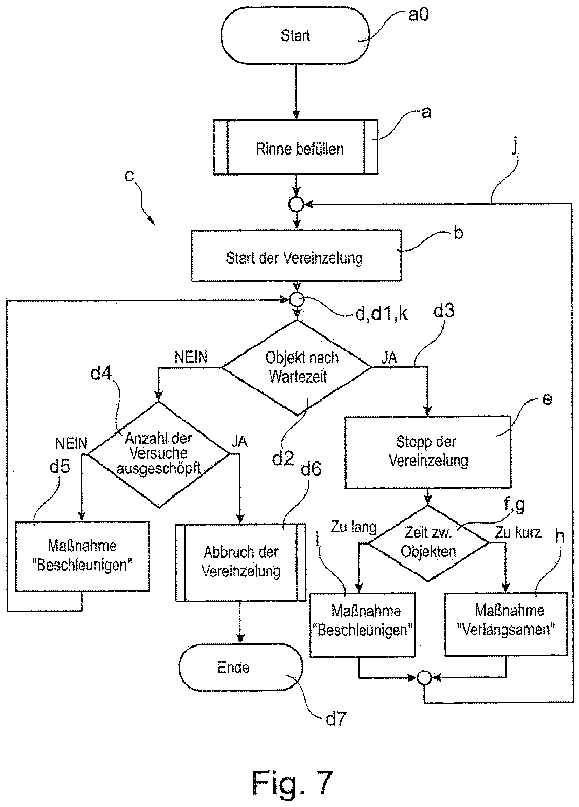

In Figur 7 ist ein Ablaufdiagramm eines Verfahrens zur Vereinzelung von kleinvolumigen Schüttgütern zu sehen. Das Verfahren wird mithilfe einer Vereinzelungsvorrichtung (in Figur 3 nicht dargestellt), die eine bewegliche Rinne umfasst, einem Objektdetektor, der ein Signal abgibt, wenn ein Schüttgutobjekt von einer Fallkante der Rinne herunterfällt, und einer Regelungseinrichtung ausgeführt. Insbesondere kann das Verfahren mit der in den Figuren 1 bis 6 abgebildeten und oben beschriebenen Vereinzelungsvorrichtung ausgeführt werden.

Das Ablaufdiagramm in Figur 7 beginnt an der Startposition a0). Als erstes wird dann in Schritt a) die Rinne befüllt. Danach kann in Schritt b) mit der Vereinzelung begonnen werden. Daraufhin werden die Bewegungen der Rinne in Schritt c) geregelt. Dabei wird zunächst in Schritt d1) eine Wartezeit abgewartet, wobei während dieser Wartezeit in Schritt d) auf den Empfang von Signalen des Objektdetektors gewartet wird. Im nächsten Schritt d2) wird nun überprüft, ob der Objektdetektor während der Wartezeit mindestens ein Signal abgegeben hat, das anzeigt, dass ein Schüttgutobjekt von der Fallkante der Rinne heruntergefallen ist.

Ist mindestens ein Schüttgutobjekt von der Fallkante der Rinne heruntergefallen - siehe Schritt d3) - so wird die Vereinzelung in Schritt e) angehalten. Das Anhalten der Vereinzelung kann entweder durch ein Interuptsignal oder durch das Erreichen des Endes der Wartezeit ausgelöst werden und geschieht durch Anhalten der reziproken Bewegungen der Rinne nach dem Schritt d) des Empfangens des aktuellen Signals des Objektdetektors.

Daraufhin wird in Schritt f) der mindestens eine Trend aus mindestens einer Objektzeit bestimmt. Die Objektzeit ist entweder der zeitliche Abstand zwischen einem vorhergehenden Signal des Objektdetektors und dem aktuellen Signal des Objektdetektors, oder - wenn der Objektdetektor seit dem Beginn der Vereinzelung in Schritt b) noch kein Signal abgegeben hat - die Zeit zwischen dem Beginn der Vereinzelung in Schritt b) und dem aktuellen Signal des Objektdetektors. Der so ermittelte Trend wird daraufhin in Schritt g) mit einem Vergleichstrend verglichen. Der Vergleichstrend kann sowohl von einem Bediener eingestellt als auch von der Regelungseinrichtung geregelt und optimiert werden. Insbesondere kann der Vergleichstrend während des Verfahrens fortlaufend in Abhängigkeit von dem mindestens einen Trend optimiert werden, um darauf hinzuwirken, dass die Objektzeiten innerhalb eines Trends einerseits möglichst klein und andererseits möglichst konstant sind.

Wenn der mindestens eine Trend kleiner ist als der voreingestellte oder optimierte Vergleichstrend, wird die Vereinzelung in Schritt h) beschleunigt, wenn der mindestens eine Trend stattdessen größer ist als der Vergleichstrend, wird die Vereinzelung in Schritt i) verlangsamt. Entspricht der mindestens eine Trend dem Vergleichstrend, wird die Vereinzelung weder beschleunigt noch verlangsamt. Daraufhin wird - siehe j) - zu Schritt b) zurückgekehrt. Alternativ sind auch Ausführungsformen des Verfahrens denkbar, bei denen nach dem Empfang mindestens eines Signals des Objektdetektors die Vereinzelung nicht mit Schritt e) angehalten wird. Bei diesen Ausführungsformen des Verfahrens ist nach dem Beschleunigen bzw. Verlangsamen der Vereinzelung in Schritt i) oder h) auch nicht notwendig, die Vereinzelung mit Schritt b) wieder zu beginnen. Daher wird bei diesen Ausführungsformen nicht über j) zu Schritt b) zurückgekehrt, sondern es wird in Schritt k) direkt auf das nächste aktuelle Signal des Objektdetektors gewartet, um einen Trend oder einen Vergleichstrend zu ermitteln zu optimieren.

Ist nach Ablauf der Wartezeit in Schritt d1) jedoch kein Schüttgutobjekt von der Fallkante der Rinne heruntergefallen, so wird in Schritt d4) überprüft, ob eine voreingestellte maximale Anzahl von erfolglosen Wartezeitdurchläufen erreicht ist. Wenn die voreingestellte maximale Anzahl von erfolglosen Wartezeitdurchläufen noch nicht erreicht ist, wird die Vereinzelung in Schritt d5) beschleunigt und anschließend zu Schritt d1) zurückgekehrt, um erneut einen Wartezeitdurchlauf mit beschleunigten Einstellungen abzuwarten. Ist die voreingestellte maximale Anzahl von erfolglosen Wartezeitdurchläufen erreicht, so wird die Vereinzelung in Schritt d6) endgültig abgebrochen und beendet. An dieser Stelle endet auch das Ablaufdiagramm - siehe Schritt d7).

### Bezugszeichenliste

- 3: Vereinzelungsvorrichtung
- 5: Regelungseinrichtung
- 30: Rinne
- 31: Antrieb
- 32: Fallkante der Rinne
- 33: Hinteres Ende der Rinne
- 34: Vorderes Ende der Rinne
- 35: Perforierter Boden der Rinne
- 36: Schikane in Gestalt einer Innenwand
- 37: Schikane in Gestalt einer Innenwand
- 38: Obere Öffnung der Rinne
- 39, 39': Schüttgutobjekt
- 40, 40': Schikane in Kreiszylindergestalt
- 41: Längsachse der Rinne
- 42: Im Wesentlichen horizontal verlaufende Achse
- 43: Horizontale
- 44: Winkel zwischen der Horizontalen und der Längsachse der Rinne
- 45: Pfeil in Schwenkrichtung um die Längsachse
- 46: Pfeil in Kipprichtung um die im Wesentlichen horizontal verlaufende Achse
- 47: Löcher im perforierten Boden
- a0: Startposition des Ablaufdiagramms
- a: Rinne befüllen
- b: Beginn der Vereinzelung
- c: Regeln der Bewegungen der Rinne
- d: Empfangen des Signals des Objektdetektors
- d1: Wartezeit
- d2: Überprüfung, ob Schüttgutobjekt nach Wartezeit heruntergefallen
- d3: Mindestens ein Schüttgutobjekt nach Wartezeit heruntergefallen
- d4: Kein Schüttgutobjekt nach Wartezeit heruntergefallen
- d5: Maßnahme Beschleunigen
- d6: Abbruch der Vereinzelung und Einnehmen der Entleerstellung
- d7: Ende des Ablaufdiagramms
- e: Anhalten der Vereinzelung
- f: Bestimmen des Trends
- g: Vergleichen des Trends mit dem Vergleichstrend
- h: Trend zu lang, Maßnahme Beschleunigen
- i: Trend zu kurz, Maßnahme Verlangsamen
- j: Zurückkehren zu Schritt b)
- k: Warten auf das nächste Signal des Objektdetektors

## Patentansprüche

1. Vereinzelungsvorrichtung (3) für kleinvolumige Schüttgutobjekte (39, 39'), umfassend einen Antrieb (31) und eine Rinne (30), wobei die Rinne (30) von dem Antrieb (31) um eine Längsachse (41) der Rinne (30) schwenkbar ist, **dadurch gekennzeichnet, dass** die Rinne (30) von dem Antrieb (31) ferner um eine im Wesentlichen horizontal verlaufende Achse (42) automatisch kippbar ist, wodurch eine Fallkante (32) an einem vorderen Ende (34) der Rinne (30) infolge der Kippbewegung (46) auf und ab bewegbar ist, und dass die Rinne (30) durch den Antrieb (31) in Vibration versetzbar ist.

2. Vereinzelungsvorrichtung nach Anspruch 1, **dadurch gekennzeichnet, dass** die Rinne (30) einen perforierten Boden (35) und/oder mindestens eine Schikane (36, 37, 40, 40') umfasst.

3. Vereinzelungsvorrichtung nach Anspruch 2, **dadurch gekennzeichnet, dass** mindestens eine Schikane als Innenwand (36, 37) ausgebildet ist, wobei die Innenwand (36, 37) quer zu der Längsachse (41) der Rinne (30) verläuft und die Rinne (30) teilweise verschließt.

4. Verfahren zum Vereinzeln von kleinvolumigen Schüttgutobjekten (39, 39') mit einer Vereinzelungsvorrichtung (3), die eine bewegliche Rinne (30) umfasst, einem Objektdetektor (35), der ein Signal abgibt, wenn ein Schüttgutobjekt (39, 39') von einer Fallkante (32) der Rinne (30) herunterfällt, und einer Regelungseinrichtung (5), wobei das Verfahren die folgenden aufeinanderfolgenden Schritte aufweist:
a) Einbringen von Schüttgutobjekten (39, 39') in die Rinne (30), wobei die Rinne (30) derart um eine im Wesentlichen horizontal verlaufende Achse (42) gekippt ist, dass eine Längsachse (41) der Rinne (30) zu der Fallkante (32) hin ansteigt;
b) Kippen der Rinne (30) um die eine im Wesentlichen horizontal verlaufende Achse (42), so dass die Längsachse (41) der Rinne (30) horizontal verläuft oder zu der Fallkante (32) hin absinkt und Beginn der Vereinzelung durch reziprokes Bewegen der Rinne (30);
c) Regeln der Bewegungen der Rinne (3) mit der Regelungseinrichtung (5) in Abhängigkeit von mindestens einem Trend, der aus mindestens einer Objektzeit gebildet wird, wobei je eine Objektzeit die Zeit zwischen einem aktuellen Signal des Objektdetektors (35) und dem Beginn der Vereinzelung in Schritt b) oder die Zeit zwischen einem aktuellen Signal des Objektdetektors (35) und einem vorhergehenden Signal des Objektdetektors (35) ist.

5. Verfahren nach Anspruch 4, **dadurch gekennzeichnet, dass** das Regeln der Bewegungen der Rinne (3) in Schritt c) die folgenden Schritte umfasst:
d) Warten darauf, dass der Objektdetektor (35) ein Signal abgibt, das anzeigt, dass ein Schüttgutobjekt (39, 39') von der Fallkante (32) der Rinne (30) heruntergefallen ist;
f) Bestimmen des mindestens eines Trends;
g) Vergleichen des mindestens einen Trends mit einem Vergleichstrend;
h) Wenn der mindestens eine Trend größer ist als der Vergleichstrend, wird die Vereinzelung beschleunigt;
i) Wenn der mindestens eine Trend kleiner ist als der Vergleichstrend, wird die Vereinzelung verlangsamt, insofern die Vereinzelung nicht optimal ist;
k) Warten auf das nächste aktuelle Signal des Objektdetektors (35).

6. Verfahren nach Anspruch 5, ferner umfassend die Schritte:
e) Anhalten der Vereinzelung durch Anhalten der reziproken Bewegungen der Rinne (3) nach dem Schritt d) des Wartens darauf, dass der Objektdetektor (35) ein Signal abgibt;
j) Zurückkehren zu Schritt b) nach der Beschleunigung der Vereinzelung in Schritt h) oder der Verlangsamung der Vereinzelung in Schritt i).

7. Verfahren nach Anspruch 5, **dadurch gekennzeichnet, dass** das Bestimmen des mindestens eines Trends in Schritt f) die folgenden Schritte umfasst:
f1) Empfangen des aktuellen Signals des Objektdetektors (35), das anzeigt, dass ein Schüttgutobjekt (39, 39') von der Fallkante (32) der Rinne (30) heruntergefallen ist;
f2) Überprüfen, ob der Objektdetektor (35) vor der Abgabe des aktuellen Signals bereits ein vorhergehendes Signal abgegeben hat;
f3) Wenn der Objektdetektor (35) seit dem Beginn der Vereinzelung noch kein vorhergehendes Signal abgegeben hat, wird die Zeit zwischen dem Beginn der Vereinzelung in Schritt b) und dem aktuellen Signal des Objektdetektors (35) als Objektzeit bestimmt;
f4) Wenn der Objektdetektor (35) seit dem Beginn der Vereinzelung bereits mindestens ein vorhergehendes Signal abgegeben hat, wird die Zeit zwischen dem vorhergehenden Signal des Objektdetektors (35) und dem aktuellen Signal des Objektdetektors (35) als Objektzeit bestimmt;
f5) Bestimmen mindestens eines Trends aus mindestens einer der bestimmten Objektzeiten.

8. Verfahren nach Anspruch 5, **dadurch gekennzeichnet, dass** nach dem Schritt b) des Beginns der Vereinzelung folgende Schritte ausgeführt werden:
d1) Abwarten einer Wartezeit;
d2) Überprüfen, ob der Objektdetektor (35) während der Wartezeit mindestens ein Signal abgegeben hat, das anzeigt, dass ein Schüttgutobjekt (39, 39') von der Fallkante (32) der Rinne (30) heruntergefallen ist;
d3) Wenn der Objektdetektor (35) während der Wartezeit mindestens ein Signal abgegeben hat, wird mit dem auf Schritt d) folgenden Schritt fortgefahren;
d4) Wenn der Objektdetektor (35) nach dem Ablauf der Wartezeit noch kein Signal abgegeben hat, wird überprüft, ob eine voreingestellte maximale Anzahl von erfolglosen Wartezeitdurchläufen erreicht ist;
d5) Wenn die voreingestellte maximale Anzahl von erfolglosen Wartezeitdurchläufen noch nicht erreicht ist, wird die Vereinzelung beschleunigt und anschließend zu Schritt d1) zurückgekehrt;
d6) Wenn die voreingestellte maximale Anzahl von erfolglosen Wartezeitdurchläufen erreicht ist, wird die Vereinzelung endgültig abgebrochen und die Rinne (30) wird um ihre Längsachse (41) geschwenkt, bis sie kopfüber steht, und derart um die im Wesentlichen horizontal verlaufende Achse (42) gekippt, dass die Längsachse (41) der Rinne (30) zu der Fallkante (32) hin ansteigt.

9. Verfahren nach Anspruch 4, **dadurch gekennzeichnet, dass** eine Empfindlichkeit des Objektdetektors (35) eingestellt wird, und dass das reziproke Bewegen der Rinne (30) im Schritt b) Schwenkbewegungen um die Längsachse (41) der Rinne (30) und/oder ein Vibrieren der Rinne (30) umfasst.

10. Verfahren nach Anspruch 9, **dadurch gekennzeichnet, dass** das Beschleunigen der Vereinzelung die folgenden Schritte umfasst:
I) Erhöhen der Empfindlichkeit des Objektdetektors (35);
II) Steigern einer Intensität der Vibration der Rinne (30);
III) Steigern einer Amplitude der Schwenkbewegungen der Rinne (30) um die Längsachse (41);
IV) Vergrößern eines Winkels (44) zwischen einer Horizontalen (43) und der Längsachse (41) der Rinne (30) durch Kippen der Rinne (30) um die im Wesentlichen horizontal verlaufende Achse (42); oder eine Kombination von mindestens zwei der Maßnahmen I) bis IV); und dass das Verlangsamen der Vereinzelung die folgenden Schritte umfasst:
V) Absenken der Empfindlichkeit des Objektdetektors (35);
VI) Senken der Intensität der Vibration der Rinne (30);
VII) Senken der Amplitude der Schwenkbewegungen der Rinne (30) um die Längsachse (41);
VIII) Verkleinern des Winkels (44) zwischen einer Horizontalen (43) und der Längsachse (41) der Rinne (30) durch Kippen der Rinne (30) um die im Wesentlichen horizontal verlaufende Achse (42); oder eine Kombination von mindestens zwei der Maßnahmen V) bis VIII).

11. Verfahren nach Anspruch 9, **dadurch gekennzeichnet, dass** der Objektdetektor (35) ein unterhalb der Fallkante (32) der Rinne (30) angeordnetes Piezoelement ist und ein Signal abgibt, wenn ein Schüttgutobjekt (39, 39') von der Fallkante (32) der Rinne (30) herunter auf das Piezoelement fällt.

12. Verfahren nach Anspruch 9, **dadurch gekennzeichnet, dass** die Schüttgüter (39, 39') homogen ist und eine Masse eines einzelnen Schüttgutobjekts (39, 39') verwendet wird, um die Empfindlichkeit des Objektdetektors (35) einzustellen.

13. Verfahren nach Anspruch 12, **dadurch gekennzeichnet, dass** die Masse eines einzelnen Schüttgutobjekts (39, 39') mittels einer Mess- oder Prüfvorrichtung (2) erfasst und der Regelungseinrichtung (5) übermittelt wird.

14. Verfahren nach Anspruch 4, **dadurch gekennzeichnet, dass** der mindestens eine Trend aus je mindestens zwei Objektzeiten gebildet wird.

15. Verfahren nach Anspruch 4, **dadurch gekennzeichnet, dass** bei einer optimalen Vereinzelung der entsprechende optimale Trend für entsprechende Schüttgüter abgespeichert wird und für zukünftige Tests zur Verfügung gestellt wird.

## Claims

1. Separating device (3) for small-volume bulk material objects (39, 39'), comprising a drive (31) and a chute (30), wherein the chute (30) can be pivoted by the drive (31) about a longitudinal axis (41) of the chute (30), **characterized in that** the chute (30) can moreover be automatically tilted by the drive (31) about an essentially horizontally extending axis (42), as a result of which a drop edge (32) at a front end (34) of the chute (30) can be moved up and down as a consequence of the tilting movement (46), and **in that** the chute (30) can be set in vibration by the drive (31).

2. Separating device according to Claim 1, **characterized in that** the chute (30) comprises a perforated base (35) and/or at least one chicane (36, 37, 40, 40').

3. Separating device according to Claim 2, **characterized in that** at least one chicane is designed as an internal wall (36, 37), wherein the internal wall (36, 37) runs transversely to the longitudinal axis (41) of the chute (30) and partially closes the chute (30).

4. Method for separating small-volume bulk material objects (39, 39') with a separating device (3) which comprises a movable chute (30), an object detector (35) which outputs a signal when a bulk material object (39, 39') drops down from a drop edge (32) of the chute (30), and a regulating unit (5), wherein the method has the following successive steps:
a) introducing bulk material objects (39, 39') into the chute (30), wherein the chute (30) is tilted about an essentially horizontally extending axis (42) in such a way that a longitudinal axis (41) of the chute (30) rises towards the drop edge (32);
b) tilting the chute (30) about the essentially horizontally extending axis (42) such that the longitudinal axis (41) of the chute (30) runs horizontally or falls towards the drop edge (32) and beginning the separating by reciprocal movement of the chute (30);
c) regulating the movements of the chute (3) with the regulating unit (5) depending on at least one trend which is formed from at least one object time, wherein in each case an object time is the time between a current signal of the object detector (35) and the beginning of the separating in step b) or the time between a current signal of the object detector (35) and a preceding signal of the object detector (35).

5. Method according to Claim 4, **characterized in that** regulating the movements in the chute (3) in step c) comprises the following steps:
d) waiting for the object detector (35) to output a signal which indicates that a bulk material object (39, 39') has dropped down from the drop edge (32) of the chute (30);
f) determining the at least one trend;
g) comparing the at least one trend with a comparison trend;
h) if the at least one trend is greater than the comparison trend, the separating is accelerated;
i) if the at least one trend is smaller than the comparison trend, the separating is slowed down, **in that** the separating is suboptimal;
k) waiting for the next current signal of the object detector (35).

6. Method according to Claim 5, moreover comprising the steps:
e) stopping the separating by stopping the reciprocal movements of the chute (3) after step d) of waiting for the object detector (35) to output a signal;
j) returning to step b) after the acceleration of the separating in step h) or the slowing down of the separating in step i).

7. Method according to Claim 5, **characterized in that** determining the at least one trend in step f) comprises the following steps:
f1) receiving the current signal of the object detector (35), which indicates that a bulk material object (39, 39') has dropped down from the drop edge (32) of the chute (30);
f2) checking whether the object detector (35) has already output a preceding signal before outputting the current signal;
f3) if the object detector (35) has not yet output a preceding signal since the beginning of the separating, the time between the beginning of the separating in step b) and the current signal of the object detector (35) is determined as the object time;
f4) if the object detector (35) has already output at least one preceding signal since the beginning of the separating, the time between the preceding signal of the object detector (35) and the current signal of the object detector (35) is determined as the object time;
f5) determining at least one trend from at least one of the determined object times.

8. Method according to Claim 5, **characterized in that** the following steps are performed after step b) of beginning the separating:
d1) waiting for a waiting time;
d2) checking whether the object detector (35) has output during the waiting time at least one signal which indicates that a bulk material object (39. 39') has dropped down from the drop edge (32) of the chute (30);
d3) if the object detector (35) has output at least one signal during the waiting time, the method continues with the step following step d);
d4) if the object detector (35) has not yet output a signal after the waiting time has expired, a check is made as to whether a preset maximum number of unsuccessful waiting time iterations has been reached;
d5) if the preset maximum number of unsuccessful waiting time iterations has not yet been reached, the separating is accelerated and the method then returns to step d1);
d6) if the preset maximum number of unsuccessful waiting time iterations has been reached, the separating is definitively interrupted and the chute (30) is pivoted about its longitudinal axis (41) until it is upside down and is tilted about the essentially horizontally extending axis (42) in such a way that the longitudinal axis (41) of the chute (30) rises towards the drop edge (32).

9. Method according to Claim 4, **characterized in that** sensitivity of the object detector (35) is set, and **in that** reciprocal movement of the chute (30) in step b) comprises pivoting movements about the longitudinal axis (41) of the chute (30) and/or vibration of the chute (30).

10. Method according to Claim 9, **characterized in that** the acceleration of the separating comprises the following steps:
I) increasing the sensitivity of the object detector (35);
II) raising the intensity of the vibration of the chute (30);
III) raising the amplitude of the pivoting movements of the chute (30) about the longitudinal axis (41);
IV) enlarging an angle (44) between a horizontal (43) and the longitudinal axis (41) of the chute (30) by tilting the chute (30) about the essentially horizontally extending axis (42); or a combination of at least two of the measures I) to IV); and **in that** the slowing down of the separating comprises the following steps:
V) decreasing the sensitivity of the object detector (35);
VI) lowering the intensity of the vibration of the chute (30);
VII) lowering the amplitude of the pivoting movements of the chute (30) about the longitudinal axis (41);
VIII) reducing the angle (44) between a horizontal (43) and the longitudinal axis (41) of the chute (30) by tilting the chute (30) about the essentially horizontally extending axis (42); or a combination of at least two of the measures V) to VIII).

11. Method according to Claim 9, **characterized in that** the object detector (35) is a piezo element arranged below the drop edge (32) of the chute (30) and outputs a signal when a bulk material object (39, 39') drops down from the drop edge (32) of the chute (30) onto the piezo element.

12. Method according to Claim 9, **characterized in that** the bulk materials (39, 39') are homogeneous and the mass of an individual bulk material object (39, 39') is used to set the sensitivity of the object detector (35).

13. Method according to Claim 12, **characterized in that** the mass of an individual bulk material object (39, 39') is detected by means of a measurement or testing device (2) and communicated to the regulating unit (5).

14. Method according to Claim 4, **characterized in that** the at least one trend is formed from in each case at least two object times.

15. Method according to Claim 4, **characterized in that**, in the case of optimal separating, the corresponding optimal trend for corresponding bulk materials is saved and made available for future tests.

## Revendications

1. Dispositif d'individualisation (3) pour objets en vrac de petit volume (39, 39'), comportant un entraînement (31) et une goulotte (30), la goulotte (30) pouvant être pivotée par l'entraînement (31) autour d'un axe longitudinal (41) de la goulotte (30), **caractérisé en ce que** la goulotte (30) peut en outre être basculée automatiquement par l'entraînement (31) autour d'un axe (42) s'étendant sensiblement horizontalement, de sorte qu'un bord de chute (32) situé à une extrémité avant (34) de la goulotte (30) peut se déplacer vers le haut et vers le bas suite au mouvement de basculement (46), et **en ce que** la goulotte (30) peut être mise en vibration par l'entraînement (31).

2. Dispositif d'individualisation selon la revendication 1, **caractérisé en ce que** la goulotte (30) comporte un fond perforé (35) et/ou au moins une chicane (36, 37, 40, 40').

3. Dispositif d'individualisation selon la revendication 2, **caractérisé en ce qu'**au moins une chicane est réalisée sous forme de paroi intérieure (36, 37), ladite paroi intérieure (36, 37) s'étendant transversalement à l'axe longitudinal (41) de la goulotte (30) et obturant partiellement la goulotte (30).

4. Procédé pour individualiser des objets en vrac de petit volume (39, 39') par un dispositif d'individualisation (3) comportant une goulotte mobile (30), un détecteur d'objet (35) qui émet un signal lorsqu'un objet en vrac (39, 39') tombe d'un bord de chute (32) de la goulotte (30), et un dispositif de réglage (5), ledit procédé comportant les étapes successives suivantes :
a) Introduire des objets en vrac (39, 39') dans la goulotte (30), la goulotte (30) étant basculée autour d'un axe (42) s'étendant sensiblement horizontalement de telle sorte qu'un axe longitudinal (41) de la goulotte (30) monte vers le bord de chute (32) ;
b) Basculer la goulotte (30) autour de l'axe (42) s'étendant sensiblement horizontalement de sorte que l'axe longitudinal (41) de la goulotte (30) s'étend horizontalement ou s'abaisse vers le bord de chute (32), et début de l'individualisation par mouvement réciproque de la goulotte (30) ;
c) Régler les mouvements de la goulotte (3) par le dispositif de réglage (5) en fonction d'au moins une tendance formée à partir d'au moins un temps d'objet, un temps d'objet étant respectivement le temps entre un signal actuel du détecteur d'objet (35) et le début de l'individualisation à l'étape b) ou le temps entre un signal actuel du détecteur d'objet (35) et un signal précédent du détecteur d'objet (35).

5. Procédé selon la revendication 4, **caractérisé en ce que** le réglage des mouvements de la goulotte (3) à l'étape c) comporte les étapes suivantes :
d) Attendre que le détecteur d'objet (35) émette un signal indiquant qu'un objet en vrac (39, 39') est tombé du bord de chute (32) de la goulotte (30) ;
f) Déterminer la au moins une tendance ;
g) Comparer ladite au moins une tendance à une tendance de référence ;
h) Si la au moins une tendance est plus grande que la tendance de référence, accélérer l'individualisation ;
i) Si la au moins une tendance est plus petite que la tendance de référence, ralentir l'individualisation dans la mesure où l'individualisation n'est pas optimale ;
k) Attendre le prochain signal actuel du détecteur d'objet (35).

6. Procédé selon la revendication 5, comportant en outre les étapes suivantes :
e) Arrêter l'individualisation en arrêtant les mouvement réciproque de la goulotte (3) après l'étape d) de l'attente de l'émission d'un signal par le détecteur d'objet (35) ;
j) Retourner à l'étape b) après l'accélération de l'individualisation à l'étape h) ou le ralentissement de l'individualisation à l'étape i).

7. Procédé selon la revendication 5, **caractérisé en ce que** la détermination de ladite au moins une tendance à l'étape f) comporte les étapes suivantes :
f1) Recevoir le signal actuel du détecteur d'objet (35) indiquant qu'un objet en vrac (39, 39') est tombé du bord de chute (32) de la goulotte (30) ;
f2) Vérifier si le détecteur d'objet (35) a déjà émis un signal précédent avant l'émission du signal actuel ;
f4) Si le détecteur d'objets (35) a déjà émis au moins un signal précédent depuis le début de l'individualisation, le temps écoulé entre le signal précédent du détecteur d'objets (35) et le signal actuel du détecteur d'objets (35) est déterminé comme temps d'objet ;
f5) Déterminer au moins une tendance à partir d'au moins un des temps d'objet déterminés.

8. Procédé selon la revendication 5, **caractérisé en ce qu'**après l'étape b) de début de l'individualisation, les étapes suivantes sont exécutées :
d1) Attendre un temps d'attente ;
d2) Vérifier si, pendant le temps d'attente, le détecteur d'objet (35) a émis au moins un signal indiquant qu'un objet en vrac (39, 39') est tombé du bord de chute (32) de la goulotte (30) ;
d3) Si le détecteur d'objet (35) a émis au moins un signal pendant le temps d'attente, passer à l'étape suivant l'étape d) ;
d4) Si le détecteur d'objet (35) n'a pas encore émis de signal après l'expiration du temps d'attente, vérifier si un nombre maximal prédéterminé de défilements de temps d'attente infructueux a été atteint ;
d5) Si le nombre maximal prédéterminé de défilements de temps d'attente infructueux n'est pas encore atteint, l'individualisation est accélérée, puis on retourne à l'étape d1) ;
d6) Si le nombre maximal prédéterminé de défilements de temps d'attente infructueux est atteint,
l'individualisation est définitivement arrêtée et la goulotte (30) est pivotée autour de son axe longitudinal (41) jusqu'à ce qu'elle soit à l'envers et basculée autour de l'axe (42) s'étendant sensiblement horizontalement de telle sorte que l'axe longitudinal (41) de la goulotte (30) monte vers le bord de chute (32).

9. Procédé selon la revendication 4, **caractérisé en ce qu'**une sensibilité du détecteur d'objet (35) est ajustée, et **en ce que** le mouvement réciproque de la goulotte (30) à l'étape b) comporte des mouvements de pivotement autour de l'axe longitudinal (41) de la goulotte (30) et/ou une vibration de la goulotte (30).

10. Procédé selon la revendication 9, **caractérisé en ce que** l'accélération de l'individualisation comporte les étapes suivantes :
I) Augmenter la sensibilité du détecteur d'objets (35) ;
II) Augmenter une intensité de vibration de la goulotte (30) ;
III) Augmenter une amplitude des mouvements de pivotement de la goulotte (30) autour de l'axe longitudinal (41) ;
IV) Agrandir un angle (44) entre une horizontale (43) et l'axe longitudinal (41) de la goulotte (30) en basculant la goulotte (30) autour de l'axe (42) s'étendant sensiblement horizontalement ; ou une combinaison d'au moins deux des mesures I) à IV) ; et **en ce que** le ralentissement de l'individualisation comporte les étapes suivantes :
V) Réduire la sensibilité du détecteur d'objets (35) ;
VI) Réduire l'intensité de la vibration de la goulotte (30) ;
VII) Réduire l'amplitude des mouvements de pivotement de la goulotte (30) autour de l'axe longitudinal (41) ;
VIII) Diminuer l'angle (44) entre une horizontale (43) et l'axe longitudinal (41) de la goulotte (30) en basculant la goulotte (30) autour de l'axe (42) s'étendant sensiblement horizontalement ; ou une combinaison d'au moins deux des mesures V) à VIII).

11. Procédé selon la revendication 9, **caractérisé en ce que** le détecteur d'objet (35) est un élément piézoélectrique disposé sous le bord de chute (32) de la goulotte (30) et émet un signal lorsqu'un objet en vrac (39, 39') tombe sur l'élément piézoélectrique depuis le bord de chute (32) de la goulotte (30).

12. Procédé selon la revendication 9, **caractérisé en ce que** les produits en vrac (39, 39') sont homogènes et qu'une masse d'un objet en vrac (39, 39') individuel est utilisée pour ajuster la sensibilité du détecteur d'objet (35).

13. Procédé selon la revendication 12, **caractérisé en ce que** la masse d'un objet en vrac (39, 39') individuel est détectée au moyen d'un dispositif de mesure ou de contrôle (2) et transmise au dispositif de réglage (5).

14. Procédé selon la revendication 4, **caractérisé en ce que** la au moins une tendance est formée à partir d'au moins deux temps d'objet.

15. Procédé selon la revendication 4, **caractérisé en ce que,** dans le cas d'une individualisation optimale, la tendance optimale correspondante est mémorisée pour des produits en vrac correspondants et mis à disposition pour des tests futurs.
